# EUROPEAN PATENT APPLICATION

(11) **EP 2 851 440 A1**
(43) Date of publication of application: **25.03.2015**
(21) Application number: 13004573.5
(22) Date of filing: 19.09.2013
(51) Int. Cl.: C21D 6/00, C21D 8/00, C21D 9/00, C21D 1/673, C22C 38/00, C22C 38/04, C22C 38/18

(54) **Steel for hot forming**

(71) Applicant: Tata Steel IJmuiden BV, NL-1951 JZ VELSEN-NOORD (NL)
(72) Inventor: Hanlon, David Neal, 1970 CA Ijmuiden (NL); van Bohemen, Stefanus Matheus Cornelis, 1970 CA Ijmuiden (NL)
(74) Representative: Kruit, Jan

(57) **Abstract**

The invention relates to a steel for hot forming

According to the invention the steel for hot forming has the following composition in weight%:
C: 0.10 - 0.25,
Mn: 1.4 - 2.8,
Si: ≤ 1.0,
Cr: ≤ 1.0,
Ti: ≤ 0.05,
Nb: ≤ 0.05,
V: ≤ 0.1,
Mo: ≤ 0.1,
Al: ≤ 0.05,
P: ≤ 0.02,
S: ≤ 0.005,
Ca: ≤ 0.005,
O: ≤ 0.01,
N: ≤ 0.02,
B: ≤ 0.0004,

the remainder being iron and unavoidable impurities.

The invention also relates to a strip, sheet or blank produced with such a steel, a method for producing a hot formed product, such a product and the use thereof.

## Description

The invention relates to a steel for hot forming.

Steels for hot forming are much used, both uncoated and pre-coated, especially in the automotive industry. These steels get high mechanical properties (such as a high strength) after heating to a temperature above the Ac3 temperature, for instance a temperature between 850 °C and 950 °C, pressing in a hot forming press and quenching at a velocity above the critical quenching rate. Before heating, these steels have a good formability and a tensile strength between 300 MPa and 500 MPa, for most grades. After the hot forming process, these steels have a very high tensile strength, which can be above 1500 MPa, and nowadays up to 2000 MPa. However, the elongation of these products is not very good, for instance an elongation of around 5%. The high tensile strength makes the hot formed products especially suitable for use in the body-in-white of automotive vehicles.

Hot forming is generally used for the direct hot forming process, but is also used in the indirect hot forming process. A general picture of hot forming (or hot stamping) is given by A. Naganathan and L. Penter, Chapter 7: Hot Stamping, in Sheet Metal Forming - Processes and Applications, (T. Altan and A. E. Tekkaya, editors), ASM International, 2012.

As indicated in this publication, for automotive purposes usually a boron- alloyed steel is used, in particular steel grade 22MnB5. The chemical composition can differ between steel suppliers, but usually the amount of carbon is approximately 0.22 weight% (usually between 0.20 and 0.25 weight%), the amount of manganese is approximately 1.27 weight% (usually between 1.00 and 1.40 weight%), the amount of silicon is approximately 0.25 weight% (usually between 0.10 and 0.40 weight%), the amount of chromium is approximately 0.15 weight% (usually between 0.1 and 0.50 weight%) and the amount of boron is approximately 0.0030 weight% (usually between 0.0020 and 0.0040 weight%). Other elements should be low, such as sulphur and phosphorus for general metallurgical reasons, and other elements can be present in small amounts, such as nickel, copper, aluminium, vanadium and titanium.

Steel grade 22MnB5 is often pre-coated before it is used in the hot forming process. The pre-coating that is generally used is a AlSi coating.

It is an object of the invention to optimize the mechanical properties of the hot formed product.

It is a further object of the invention to provide a steel for hot forming that provides an alternative to the known steels for hot forming, such as 22MnB5.

It is another object of the invention to provide a steel for hot forming that can be used by the automotive industry without changes to the equipment used at present.

It is a further object of the invention to provide a steel for hot forming which enables a more efficient use of the hot forming equipment.

According to the invention a steel for hot forming is provided having the following composition in weight%:
C: 0.10 - 0.25,
Mn: 1.4 - 2.8,
Si: ≤ 1.0,
Cr: ≤ 1.0,
Ti: ≤ 0.05,
Nb: ≤ 0.05,
V: ≤ 0.1,
Mo: ≤ 0.1,
Al: ≤ 0.05,
P: ≤ 0.02,
S: ≤ 0.005,
Ca: ≤ 0.005,
O: ≤ 0.01,
N: ≤ 0.02,
B: ≤ 0.0004,
the remainder being iron and unavoidable impurities.

The inventors have found that the mechanical properties of the hot formed product are optimized because the number of non-metallic constituents in the steel substrate are reduced. Non-metallic constituents reduce the homogeneity of the substrate and these inhomogeneities can lead to local stress concentrations and pre-mature failure of a mechanically loaded product. Typical non-metallic constituents in steel are TiN, BN, Fe₂₆(B,C)_{6,} MnS, AlN, CaS, Al₂O₃, P, Fe₃C etc. The invented steel composition is aimed to reduce the size and amount of all these non-metallic constituents by reducing as much as possible the amount of B, Ti, S, Ca, Al, P and other required chemical elements.

The nowadays commonly used 22MnB5 substrate composition contains 20 to 40 ppm boron (B) to improve the hardenability during hot forming operations. To maintain this element in its functional state, the steelmaker adds titanium (Ti) to the cast to prevent B to form boron nitride (BN). The presence of BN near the surface can deteriorate the quality of the hot dipped coating. The Ti is normally added in an over-stochiometric ratio to the nitrogen (N) to maximize the efficiency of the added amount of B. Due to this over-stoichiometric amount of Ti, titanium nitrides will form, that are known as hard, non-deformable inclusions. Boron is also known to form fine Fe₂₆(B,C)₆ complex precipitates that can lead to local stress concentrations in the matrix. Therefore the inventors have removed the B and Ti from the steel composition as much as possible to limit the presence of B and Ti based non-metallic constituents. To compensate for the loss of hardenability by reducing the amount of B, the inventors added manganese (Mn) and chromium (Cr).

Mn is a favourable metallic component because of its compatibility with the iron matrix. Moreover, the addition of more Mn than in the commonly used 22MnB5 reduces the *Ac₁* and *Ac₃* temperature of the steel substrate. This means that a lower furnace temperature can be utilized to austenitize the substrate prior to hot forming. Reducing the furnace temperature is economically and environmentally favourable and also opens up new process opportunities for Zn, Zn alloy or Al and Al alloy coatings. For Zn alloy coatings it is commonly known that an increased furnace temperature reduces the corrosion performance of the hot formed product. For Al or Al alloy coatings it is known that high furnace temperatures reduce the weldability of the component. A steel composition that enables the use of lower furnace temperatures is therefore favourable over the commonly used 22MnB5.

In contrast to B, Mn does strengthen the substrate by solid solution strengthening. Furthermore, Mn additions also lower the Mₛ temperature, which means that less (auto-)tempering will occur and therefore the substrate will have a higher martensite strength at room temperature. Due to both strengthening mechanisms, the inventors claim that they can reduce the amount of carbon (C) in steel substrates for hot forming and obtain a similar strength level as achieved with 22MnB5. Reducing the amount of C is favourable to prevent Fe3C formation during (auto-)tempering during the hot forming process step. Fe3C precipitates can introduce local inhomogeneities and stress concentrations during mechanically loading, leading to premature failure of the product. Furthermore, the spot-weldability of hot-formed products will improve due to the lower C content in the inventive steel substrate.

Similar to Mn, Cr increases the hardenability, and it also lowers the Mₛ temperature. Furthermore, Cr contributes to the strength of the substrate by solid solution strengthening.

Si also delivers a solid solution strengthening contribution. In addition, Si retards the (auto)tempering because of its weak solubility in carbides.

Sulphur (S) is a common element found in steel substrates. Steelmakers use various desulphurization methods to reduce the amount of S because it could lead to hot-shortness during continuous casting. S can also precipitate with manganese (Mn) to form soft MnS inclusions. During hot rolling and subsequent cold rolling, these inclusions are elongated and form relatively large inhomogeneities that could lead to premature failure, especially when loaded in the tangential direction. Calcium (Ca) can be added to spherodize the S containing inclusions and to minimize the amount of elongated inclusions. However, the presence of CaS inclusions will still lead to inhomogeneities in the matrix. Therefore, it is best to reduce S.

Aluminium (Al) is normally added to steel in an over-stoichiometric ratio to oxygen (O) to prevent carbon monoxide (CO) formation during continuous casting by reducing the available amount of free O through formation of aluminium oxide Al₂O₃. The formed Al₂O₃ normally forms a slag on top of the liquid steel, but can be entrapped in the solidifying steel during casting. During subsequent hot and cold-rolling, this inclusion will become segmented and forms non-metallic inclusions that lead to premature fracture upon mechanically loading the product. The over-stoichometric Al precipitates as aluminium nitrides (AlN) which also leads to local inhomogeneities in the steel matrix.

Preferably the more limited amounts of the elements according to claim 2 or 3 are used. It will be clear that a more limited amount of the elements as specified in claims 2 and 3 provides a steel in which the number of non-metallic constituents in the steel substrate are further reduced. Claim 3 shows that it is possible to use a steel for hot forming in which no boron is added, such that the boron in the steel will be only present as an unavoidable impurity. Though the amount of boron that will be present as an impurity will depend on the raw materials used in the ironmaking process and also depends on the steelmaking process, the inventors have found that the impurity level for boron that is nowadays obtained has a maximum of 0.0001 weight% or 1 ppm.

The steel for hot forming as described above is used for producing a strip, sheet or blank having the usual dimensions, such as a hot-rolled and optionally cold rolled strip having a length of more than 100 m, a width between 800 and 1700 mm, and a thickness between 0.8 and 4.0 mm. Such a strip is cut into sheets and blanks.

Preferably, the strip, sheet or blank is pre-coated with a layer of aluminium or an aluminium based alloy, or pre-coated with a layer of zinc or a zinc based alloy. Pre-coated blanks are preferred by the automotive industry for body-in-white parts.

Preferably the pre-coating comprises 5 to 13 wt% silicon and/or less than 5 wt% iron, the remainder being aluminium, the pre-coating preferably having a thickness between 10 and 40 µm per side, more preferably a thickness between 20 and 35 µm per side. Such thicknesses provide a good corrosion protection for the hot formed parts coated with the specified aluminium alloy.

More preferably, the pre-coating comprised 8 to 12 wt% silicon and/or 2 to 5 wt% iron, the remainder being aluminium. Such an aluminium-alloy pre-coating is commonly used.

According to another preferred embodiment the pre-coating is an iron-zinc diffusion coating obtained by heat treating a zinc layer, the zinc layer comprising Al < 0.18 wt% and Fe < 15 wt%, the remainder being zinc and traces of other elements, the pre-coating preferably having a thickness between 5 and 15 µm per side, more preferably a thickness between 6 and 13 µm per side. This zinc pre-coating provides good corrosion properties.

According to a further preferred embodiment the pre-coating comprises 0.5 to 4 wt% Al and 0.5 to 3.2 wt% Mg, the remainder being zinc and traces of other elements, the coating layer preferably having a thickness between 5 and 15 µm per side, more preferably a thickness between 6 and 13 µm per side. This pre-coating provides even better corrosion properties.

According to the invention furthermore is provided a method for producing a hot formed product using the strip, sheet or blank as described above, using the following steps:
- providing a blank, for instance by cutting the strip or sheet
- heating the blank to a temperature above the Ac1 temperature of the steel, preferably above the Ac3 temperature of the steel
- transporting the heated blank into a hot forming press
- forming the blank into a product in the press
- quenching the product to provide it with desired mechanical properties.

Using this method a hot formed product is produced having the mechanical properties as needed for automotive purposes, which product is either uncoated or coated, dependent on the blank used. As elucidated above, the Ac1 and Ac3 temperatures are lower for the composition according to the invention as compared to the commonly used 22MnB5 type steel.

Preferably the blank is heated to a temperature between the Ac1 temperature and 950°C, preferably between the Ac3 temperature and 900°C. Since the Ac1 and Ac3 temperatures are lower for the composition according to the invention, as discussed above, it is preferably even possible to use heating temperatures below 900°C

According to a preferred embodiment the heated blank is forcibly cooled before putting it in the hot forming press. Such cooling positively influences the properties of the formed product.

The invention also encompasses a product produced using the method as described above. This product has the mechanical properties provided by the hot forming method, as needed for automotive or other purposes.

Preferably a product as described above is used in a body-in-white of a vehicle. For this purpose also other properties besides mechanical properties are have to be taken into account, such as the weldability of the product.

## Claims

1. Steel for hot forming having the following composition in weight%:
C: 0.10 - 0.25,
Mn: 1.4 - 2.8,
Si: ≤ 1.0,
Cr: ≤ 1.0,
Ti: ≤ 0.05,
Nb: ≤ 0.05,
V: ≤ 0.1,
Mo: ≤ 0.1,
Al: ≤ 0.05,
P: ≤ 0.02,
S: ≤ 0.005,
Ca: ≤ 0.005,
O: ≤ 0.01,
N: ≤ 0.02,
B: ≤ 0.0004,
the remainder being iron and unavoidable impurities.

2. Steel according to claim 1, wherein:
C: 0.12 - 0.25 and/or
Mn: 1.6 - 2.6 and/or
Si: ≤ 0.3 and/or
Cr: ≤ 0.8 and/or
Ti: ≤ 0.001and/or
Nb: ≤ 0.001 and/or
V: ≤ 0.001 and/or
Mo: ≤ 0.001 and/or
N: ≤ 0.01 and/or
B: ≤ 0.0002.

3. Steel according to claim 1 or 2, wherein:
C: 0.15 - 0.21 and/or
Mn: 1.8 - 2.4 and/or
B: ≤ 0.0001.

4. Strip, sheet or blank produced with the steel according to any one of the preceding claims.

5. Strip, sheet or blank according to claim 4, pre-coated with a layer of aluminium or an aluminium based alloy, or pre-coated with a layer of zinc or a zinc based alloy.

6. Strip, sheet or blank according to claim 5, wherein the pre-coating comprised 5 to 13 wt% silicon and/or less than 5 wt% iron, the remainder being aluminium, the pre-coating preferably having a thickness between 10 and 40 µm per side, more preferably a thickness between 20 and 35 µm per side.

7. Strip, sheet or blank according to claim 6, wherein the pre-coating comprised 8 to 12 wt% silicon and/or 2 to 5 wt% iron, the remainder being aluminium.

8. Strip, sheet or blank according to claim 5, wherein the pre-coating is an iron-zinc diffusion coating obtained by heat treating a zinc layer, the zinc layer comprising Al < 0.18 wt% and Fe < 15 wt%, the remainder being zinc and traces of other elements, the pre-coating preferably having a thickness between 5 and 15 µm per side, more preferably a thickness between 6 and 13 µm per side.

9. Strip, sheet or blank according to claim 5, wherein the pre-coating comprises 0.5 to 4 wt% Al and 0.5 to 3.2 wt% Mg, the remainder being zinc and traces of other elements, the pre-coating preferably having a thickness between 5 and 15 µm per side, more preferably a thickness between 6 and 13 µm per side.

10. Method for producing a hot formed product using the strip, sheet or blank according to any one of the claims 5 - 9, using the following steps:
- providing a blank, for instance by cutting the strip or sheet
- heating the blank to a temperature above the Ac1 temperature of the steel, preferably above the Ac3 temperature of the steel
- transporting the heated blank into a hot forming press
- forming the blank into a product in the press
- quenching the product to provide it with desired mechanical properties.

11. Method according to claim 10, wherein the blank is heated to a temperature between the Ac1 temperature and 950°C, preferably between the Ac3 temperature and 900°C.

12. Method according to claim 10 or 11, wherein the heated blank is forcibly cooled before putting it in the hot forming press.

13. Product produced using the method according to any one of claims 10 - 12.

14. Use of a product according to claim 13 in a body-in-white of a vehicle.
